Europäisches Patentamt

(19) European Patent Office (11) Publication number: **0 039 435**

Office européen des brevets **A1**

(12) **EUROPEAN PATENT APPLICATION**

(21) Application number: **81102955.2**

(22) Date of filing: **16.04.81**

(51) Int. Cl.³: **F 04 D 29/16,** F 16 J 15/44

(30) Priority: **02.05.80 US 146365**

(43) Date of publication of application: **11.11.81 Bulletin 81/45**

(84) Designated Contracting States: **AT DE FR GB IT SE**

(71) Applicant: **JACUZZI INC., 11511 New Benton Highway, Little Rock Arkansas 72203 (US)**

(72) Inventor: **Larson, James Pete, Route 1, Box 9, Traskwood Arkansas 72167 (US)**
Inventor: **Wilkes, Robert D., 3004 Shenandoah Valley Drive, Little Rock Arkansas 72207 (US)**

(74) Representative: **Leiser, Gottfried, Dipl.-Ing. et al, Patentanwälte Prinz-Hauser-Leiser Ernsberger Strasse 19, D-8000 München 60 (DE)**

(54) **Free floating sealing disk for centrifugal fluid pump.**

(57) A sealing means (60) is provided in a centrifugal pump adjacent the impeller eye extension (35) and a separation wall (56) which is a rigid disk-like member being free to oscillate radially in cooperation with the impeller eye (34) and being restrained from rotating with the impeller eye for reducing fluid recirculation flow through the pump.

ACTORUM AG

- 1 -

# D E S C R I P T I O N

"FREE FLOATING SEALING DISK
FOR CENTRIFUGAL FLUID PUMP"

This invention relates to a sealing means for use in a centrifugal pump.

Centrifugal fluid pumps have as their principal moving part an impeller. The impeller may be radial discharge, or axial discharge, or it may be "mixed" and discharge oblique to a principal direction. Radial and "mixed" impellers may be further characterized as having only rotating vanes (open), vanes attached to one disk (semi-open) or vanes sandwiched between two disks (closed). The present invention pertains to radial or "mixed" impellers of the closed type wherein a central area on at least one side of the impeller is open to provide a passageway for fluid entering the impeller. This opening, called the impeller eye, is frequently extended, in tube-like fashion, both to provide a lateral bearing support and to serve as a means to achieve sealing.

The impeller eye projects through a stationary wall referred to as the separation wall which has an opening to receive the extension of the impeller eye. Non-concentricity between the impeller eye and the opening in the separation wall along with the slight wobble accompanying rotation of the impeller requires this opening to be made large enough to allow the extension to rotate freely within its confines. To do otherwise would obviously create mechanical friction with its inherent mechanical energy loss. However, the larger the clearance, the greater will be the fluid recirculation flow for any given pressure differential between the input to the impeller eye and the output from the impeller vanes. This recirculation also presents a fluid energy loss, and the artisan is left with a seemingly "no win" situation.

Popular current practice has been to minimize manufacturing tolerances and maximize quality control in an effort to minimize radial displacement, hence, minimize the clearance required for non-contact operation. In commercial pumps, particularly those of split case design, labyrinth seals and miniature shear pump configurations have been used successfully to retard leakage. More recently, elastomer seals have appeared in the market place. These seals are thin disk-like members attached to the separation wall which provide only a small clearance about the eye extension. However, the elastomeric ring "seal" could require a significant energy drain, due to contact and friction as the impeller rotates.

U.S. Patent 3,203,353 issued to C.J. Ruby on August 31, 1965 shows a disk 24 rotatably fitted on a hub 20 of an impeller in a gap between a face of the impeller and an opposed face of the pump housing. The disk, being free to rotate with the hub of the impeller, requires a significant energy drain due to fluid shear friction of the rotating disk.

The present invention utilizes a disk-like rigid sealing member having a central opening very close to the eye extension in diameter, i.e., having a clearance on the order of .001 cm/cm (.001 in/in) diameter or less. The disk is located in the separation wall so that it is free to translate or oscillate radially. This freedom to move radially with respect to the separation wall allows the sealing member to effectively compensate for the non-concentricity between the impeller eye and the separation wall opening. Also, the sealing disk is free

- 3 -

to translate or oscillate radially as urged by the impeller eye extension wobble, but is restrained from rotating with the impeller eye about the axis, for example, by loose fitting hexagonal disk boundaries loosely engaging a hexagonal cavity in the separation wall. There is also freedom for axial movement, although the disk is prevented from dislodging in service and transit. The disk is rigid and flat against the separation wall.

The compensation for non-concentricity will be a one time event occurring when the impeller eye extension is inserted in the separation wall opening. No frictional movement will occur after the initial adjustment.

In service, the disk is held flat against the separation wall by the differential pressure across the wall. As the impeller rotates, it typically rotates with some radial eccentricity. The sealing disk, fitting very close diametrically, will be urged to follow this radial eccentric movement by virtue of contact with the eye extension.

The disk is constructed from a rigid material having low friction with the eye extension. This contact is lubricated by the pumped fluid. It is also lubricated at the separation wall by the pumped fluid. The disk, therefore, may be characterized as floating on a fluid film everywhere there is sliding contact. There are no forces acting on the part to oppose its following the eye extension wobble, except its own inertia and the fluid shear in the film between it and the separation wall. The only other principal force on it is the rotational friction force reaction at the hexagonal restraint.

ON THE DRAWINGS

Figure 1 is a cross-sectional view of a two stage centrifugal pump embodying the principles of the invention.

Figure 2 is a view taken along line II-II of Figure 1 showing additional details of the sealing disk in the pump.

Figure 3 is a cross-sectional view along line III-III of Figure 2.

Figure 4 is an enlarged cut-away view of a cross-section similar to that shown in Figure 3.

Figure 5 is a perspective view of an alternative embodiment of the invention.

Figure 6 is a cut-away diagrammatic view of a portion of the alternative embodiment shown in Figure 5.

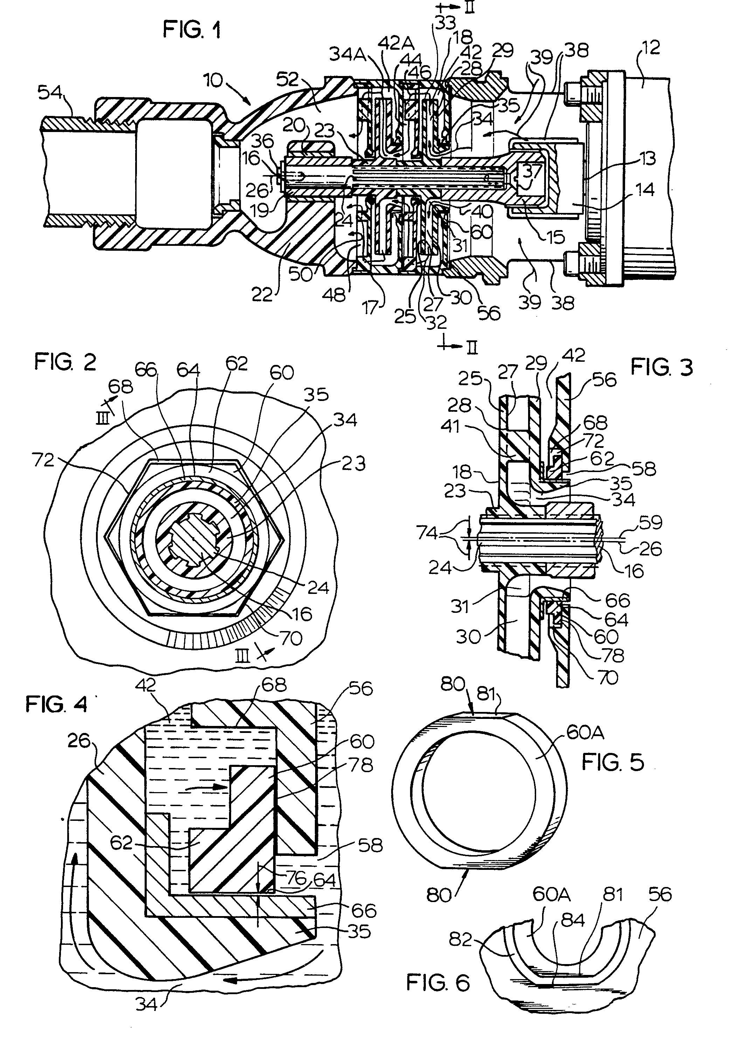

In Figure 1 a two-stage centrifugal pump assembly is generally shown at 10 and is comprised of a motor 12 having a central rotating shaft 13 which in turn drives, by means of a drive coupling 14 and drive shaft spacer 15, an axially rotating shaft 16 used to rotate two sets of impellers 18 contained within a casing 17. A two stage pump is shown for illustration purposes only although those versed in the art will recognize that the principles of the present invention are also applicable in single stage pumps and multiple stage pumps. The axially rotating shaft 16 is rigidly mounted within a spacer bearing means 19 which rotates within a bearing means 20 located within a support 22 such that the shaft 16 is free to rotate axially but is restricted in its radial movement.

The impeller 18 is comprised of a hub 23 mounted about the shaft 16 which is driven thereby by means of a plurality of splines 24 formed on the outer surface of the shaft 16 which are engaged in similarly shaped troughs formed in the interior diameter of the hub 23. Carried on the hub 23 is a drive disk 25 disposed perpendicular to the drive axis 26 and which forms a wall 27 upon which a plurality of impeller vanes 28 are mounted. A second disk 29 is mounted on the vanes 28 parallel to the drive disk 25. The vanes 28 constitute walls between the drive disk 25 and the second disk 29 thereby forming passages 30 having an inlet end 31 adjacent the hub 23 and an outlet end 32 adjacent an outer circumference or periphery 33 of the drive disk 25 and the second disk 29.

The second disk 29 has formed therein a central opening 34 referred to as the impeller eye which is in communication with the inlet end 31 of the impeller vane passages 30. The vanes 28 may project radially outward from the impeller eye 34 in a linear or in a curved manner as at 41. The impeller eye 34 is extended in a tube-like extension wall 35 to provide a lateral bearing support and to achieve sealing. The assembly comprised of the spacer bearing means 19, hubs 23, 23 and drive shaft spacer 15 is retained by appropriate fastening means such as axially mounted screws 36, 37 in a fixed spaced relation.

In operation the rotating shaft 13 of the motor 12 through the drive coupling 14 rotates the shaft 16 and thus the impeller 18. The pump assembly 10 is submersed in a liquid to be pumped and the rotation of the impeller 18 causes the liquid to flow through the pump. Specifically, liquid is drawn into the pump through an inlet 38 for each impeller as shown by arrows 39. This liquid is drawn into the impeller eye 34 as shown by arrow 40 where it enters the inlet end 31 of the impeller vane passage 30. Due to the liquid's rotating in the impeller its pressure is increased by centrifugal force, and it is delivered at the outlet end 32 into a diffuser chamber 42 with an increased pressure and a high velocity. In order to convert the high liquid velocity into pressure energy, the liquid then flows through a diverging passageway 44 and is therefrom drawn into the impeller eye 34A of the second stage of the pump.

The flow through the second stage of the pump is similar to that in the first stage and again the pressure and velocity of the liquid in the diffuser cavity 42A of the second stage is high relative to the pressure of the liquid at the impeller eye 34A of the second stage and is increased with respect to the pressure in diffuser cavity 42 of the first stage. The fluid flow continues through another diverging passageway 48 as shown by arrow 50 to convert the exit velocity into pressure energy, into chamber 52 which communicates with an outlet pipe 54 through which the fluid flows in a high pressure stream.

A separation wall 56 prevents the high pressure fluid in diffuser cavity 42 from returning to the low pressure area near the impeller eye 34, however since the separation wall 56 does not rotate with the impeller eye extension wall 35, and the impeller eye 34 rotates with some radial eccentricity, there is a circular clearance opening 58, having a center at 59 as seen in Figure 3, through the separation wall 56 for the extension wall 35. The clearance opening 58 must be large enough to accommodate not only the slight wobble of the impeller eye but more importantly, the non-concentricity between the impeller eye extension 35 and the opening 58.

Because of the high pressure differential across the separation wall, the problem of recirculation flow of the fluid through the clearance opening 58 is substantial. The present invention provides for a sealing means 60 to be located about the impeller eye extension wall 35 adjacent the separation wall 56 for reducing the fluid recirculation flow through the clearance opening 58.

The sealing means 60 is shown in Figure 2 as a hexagonally shaped disk with a circular extension 62 formed thereon. The sealing means 60 has formed therein a central opening or interior diameter 64 to receive the impeller eye extension wall 35. A metallic bearing 66 is provided between the impeller eye extension wall 35 and the central opening 64 of the sealing means 60 for reduced friction and wear. The bearing 66 may be attached to the extension wall 35 to co-rotate therewith.

During operation, the shaft 16 and thus the impeller assembly, including the impeller eye extension wall 35, tends to wobble. More importantly, the drive axis 26 of the impeller eye and the center 59 of the opening may not be exactly concentric. It is contemplated that a clearance opening in pumps of this type on the order of .012 to .030 cm/cm (.012 to .030 in/in) of diameter will minimize the adverse effects of such non-concentricity and wobble. The clearance between the opening 64 and the bearing 66 is on the order of .001 cm/cm (.001 in/in) of diameter thus providing for a substantially reduced clearance opening at arrows 76 over known prior art practice.

To accommodate this non-concentricity and wobbling, the sealing means 60 is located in the separation wall so that it is free to translate or oscillate radially as urged by the impeller eye extension wall wobble, but is restrained from rotating with the impeller eye extension wall about the axis. This can be accomplished as in Figure 2, by providing a hexagonally shaped receptacle 68 in the separation wall 56 for receiving the sealing means 60. The receptacle 68 is sized slightly larger than the exterior circumference of the sealing means 60 so as to provide for radial oscillation of the sealing means 60. The compensation for non-concentricity will be a one time event causing the sealing means 60 to locate non-concentrically in the receptacle 68. The exterior circumference of the sealing means 60 is larger than the clearance opening 58 to provide for positive locating of the sealing means 60 in the receptacle 68.

As seen in Figure 2, the sealing means 60 is located in close proximity with the wall of the receptacle 68 at a point 70 compensating for the non-concentricity, while adequate space for radial wobble is still provided at point 70 and on the opposite side of the sealing means at point 72. The sealing means 60 is restrained from rotating with the impeller eye extension wall 35 due to its hexagonal shape fitting within the hexagonal receptacle 68 formed in the separation wall 56.

Figure 3 shows a cross-sectional view of the sealing means 60 in place within the receptacle 68 of the separation wall 56 with the interior diameter 64 in close proximity to the metallic bearing 66. Thus the clearance opening 58 is effectively closed by the sealing means. The non-concentricity of the drive axis 26 and the center 59 of the opening 58 is shown at arrows 74. The point of close proximity between the sealing means 60 and the wall of the receptacle 68 due to non-concentricity is shown at 70 and the excess space is shown at 72. Space is available at 70 and 72 for radial wobble.

As more clearly shown in greater detail in Figure 4, the sealing means 60 is received within the receptacle 68 of the separation wall 56 and is located about the impeller eye extension wall 35 with the bearing 66 located therebetween. Cavity 42 extends all along the interior of the separation wall 56 and normally would communicate through clearance opening 58 to the area adjacent the impeller eye 34. Thus the high pressure fluid would normally recirculate from the area of high fluid pressure in cavity 42 through the clearance opening 58 into the area of low fluid pressure adjacent the impeller eye 34. The sealing means 60 provides an effective seal against this recirculation flow by reducing the clearance opening substantially as is shown by arrows 76.

The sealing means 60 can be made of a rigid material having a low friction such as a thermoplastic commercially available under the trademark "Ryton". This low friction material combined with the small fluid flow through the now reduced clearance opening at 76 provides for a highly effective low friction seal between the rotating impeller eye extension wall 35 and the non-rotating sealing means 60. Although the sealing means 60 is retained against the separation wall 56 by means of the pressure differential across the seal, a thin film of liquid is present between the sealing means 60 and the separation wall 56 at 78. Thus when the sealing means 60 is urged to follow the wobble of the impeller eye extension wall 35, the shearing forces between the sealing means 60 and the separation wall 56 at 78 are reduced due to the lubricating nature of the fluid located therebetween. The circular extension portion 62 of the sealing means 60 is provided to retain the sealing means 60 within the receptacle 68 during periods of nonuse. Its thickness also allows for some axial movement.

An alternative embodiment of the invention is shown in Figures 5 and 6, wherein the sealing means 60A is formed generally in a circular shape having a rectangular cross-section. Two chordal portions 80 are provided on opposite diametral locations in the exterior circumference and form flat surfaces 81 for retaining the sealing means 60A in a non-rotational manner with respect to the impeller eye extension wall 35. This alternative embodiment of the sealing means 60A is similarly located within a receptacle 82 in the separation wall 56 which would have a similar shape, that is, generally circular with matched and mated flat portions 84. The receptacle would also be of a slightly larger diameter than the sealing means 60A. The thickness of the sealing means 60A would be large enough to retain the sealing means 60A within the receptacle in the separation wall 56 during periods of nonuse, however would provide for some axial movement.

As is apparent from the foregoing specification, the invention is susceptible of being embodied with various alterations and modifications which may differ particularly from those that have been described in the preceding specification and description. It should be understood that we wish to embody within the scope of the patent warranted hereon all· such modifications as reasonably and properly come within the scope of our contribution to the art.

CLAIMS:

1. In a centrifugal pump having motor driven axially rotating impeller vanes forming passages having inlets adjacent a central axis and projecting radially outward therefrom and being located between two disks formed perpendicular to said axis to discharge a liquid radially outward from said axis into a high pressure area, an impeller eye formed about said axis and communicating with said passage inlets through one of said disks providing a passageway for fluid to enter said impeller passage inlets from a low pressure area, said impeller eye forming a circular tube-like extension wall axially away from said impeller vanes, a separation wall between said high pressure area and said low pressure area, said separation wall having formed therein an oversized circular opening to receive said impeller eye extension, the improvement of a sealing means comprising: a rigid disk-like member having a central circular opening with an interior diameter slightly larger than the exterior diameter of said impeller eye extension wall and having an exterior diameter larger than the interior diameter of the separation wall opening, said sealing means being located about said impeller eye extension wall adjacent said separation wall and being free to oscillate radially about said axis but being restrained from rotating about said axis.

2. The centrifugal pump of claim 1, wherein the separation wall has formed therein about the circular opening on the high pressure side thereof a cavity of a given shape and diameter and the sealing means is formed having a similarly shaped circumference of a diameter slightly smaller than said cavity diameter whereby said sealing member is loosely engaged in said cavity being free to oscillate radially about said axis but being restrained from rotating about said axis.

3. The centrifugal pump of claim 1, wherein the separation wall has formed therein about the circular opening on the high pressure side thereof a hexagonal cavity of a given diameter and the sealing means is formed having a hexagonally shaped circumference of a diameter slightly smaller than said cavity diameter whereby said sealing member is loosely engaged in said cavity being free to oscillate radially about said axis but being restrained from rotating about said axis.

4. The centrifugal pump of claim 1, wherein said sealing means is located on said high pressure side of said separation wall whereby said sealing means is retained against said wall by fluid pressure.

5. In a centrifugal pump having motor driven axially rotating impeller vanes forming passages having inlets adjacent a central axis and projecting radially outward therefrom and being located between two disks formed perpendicular to said axis to discharge a liquid radially outward from said axis into a high pressure area, an impeller eye formed about said axis and communicating with said passage inlets through one of said disks providing a passageway for fluid to enter said impeller passage inlets from a low pressure area, said impeller eye forming a circular tube-like extension wall axially away from said impeller vanes, a separation wall between said high pressure area and low pressure area, said separation wall having formed therein an oversized circular opening to receive said impeller eye extension, the improvement of a sealing means located about said impeller eye extension wall adjacent said separation wall, being free to oscillate radially in cooperation with said impeller eye extension and being restrained from rotating with said impeller eye extension for reducing fluid recirculation flow from said high pressure area to said low pressure area through said separation wall opening.

6. In a centrifugal pump having an impeller eye extending through a clearance hole in a separation wall, the improvement of a sealing means located adjacent said separation wall and said impeller eye, being free to oscillate radially in cooperation with said impeller eye, and being restrained from rotating with said impeller eye whereby fluid recirculation flow through said clearance opening is severely restricted.

7. The method of restricting recirculation flow through a clearance opening in a centrifugal pump having an impeller eye extending through said clearance opening in a separation wall comprised of the steps: placing a sealing means about said impeller eye, allowing said sealing means to oscillate radially in cooperation with said impeller eye, restricting said sealing means from rotating axially in cooperation with said impeller eye.

8. A centrifugal pump having a casing means having an inlet and an outlet, a centrifugal impeller means having an outer periphery rotatable in said casing with an axially extending wall concentrically disposed with respect to the rotation axis and forming a centrally disposed impeller eye, a separation wall separating a low pressure area at said inlet from a high pressure area at said outer periphery, said separation wall having a central oversized opening for receiving said axially extending wall of said impeller means, a ring shaped sealing means adjacent said separation wall and outwardly adjacent said axially extending wall of said impeller means, said sealing means and said extension wall having clearance in the order of .001 cm/cm (.001 in/in) diameter, said sealing means being free to oscillate radially in cooperation with said impeller eye extension and being restrained from rotating with said impeller eye extension for reducing fluid recirculation flow from said high pressure area to said low pressure area through said separation wall opening.

0039435

FIG. 1

FIG. 2

FIG. 3

FIG. 4

FIG. 5

FIG. 6

European Patent Office

**EUROPEAN SEARCH REPORT**

0039435

Application number

EP 81 10 2955

## DOCUMENTS CONSIDERED TO BE RELEVANT

| Category | Citation of document with indication, where appropriate, of relevant passages | Relevant to claim |
|---|---|---|
| X | US - A - 4 018 544 (EBERHARDT) <br> * Columns 3,4; figures 2,5 * | 1,2,4, 5-8 |
| X | FR - A - 850 685 (WEIR) <br> * Whole document * | 1,2,4- 8 |
| | US - A - 1 783 427 (JENNINGS) <br> * Whole document * | 1,2, 4-7 |

**CLASSIFICATION OF THE APPLICATION (Int. Cl.³)**

F 04 D 29/16
F 16 J 15/44

**TECHNICAL FIELDS SEARCHED (Int. Cl.³)**

F 04 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 17-08-1981 | WENZEL |

EPO Form 1503.1   06.78